# EUROPEAN PATENT SPECIFICATION

(11) **EP 3 650 386 B1**
(45) Date of publication and mention of the grant of the patent: **01.12.2021**
(21) Application number: 19204425.3
(22) Date of filing: 21.10.2019
(51) Int. Cl.: B66B 1/46, B66B 3/00, H04W 4/021, H04W 4/33

(54) **COMMUNICATION IN AN ENVIRONMENT OF ELEVATOR COMMUNICATION SYSTEM INSIDE A BUILDING**
KOMMUNIKATION IN EINER UMGEBUNG EINES AUFZUGSKOMMUNIKATIONSSYSTEMS INNERHALB EINES GEBÄUDES
COMMUNICATION DANS UN ENVIRONNEMENT DE SYSTÈME DE COMMUNICATION D'ASCENSEUR À L'INTÉRIEUR D'UN BÂTIMENT

(30) Priority: 24.10.2018 CN 201811242286
(43) Date of publication of application: 13.05.2020
(73) Proprietor: Otis Elevator Company, Farmington, Connecticut 06032 (US)
(72) Inventor: Gou, XinGang, Shanghai, Shanghai (CN)
(74) Representative: Dehns

(56) References cited:
- WO-A1-2007/093665
- WO-A1-2017/025106
- WO-A2-2016/010508

## Description

### CROSS-REFERENCE TO RELATED APPLICATION

This application claims priority from Chinese patent application No.201811242286.9, filed on October 30, 2019.

### FIELD OF THE INVENTION

The present disclosure pertains to the field of communication technology, and relates to a communication method in an environment of elevator communication system inside a building, and an elevator communication system.

### BACKGROUND OF THE INVENTION

In a building with an elevator system, with the development of intelligentization of the elevator system, the communication function of the corresponding elevator communication system is becoming more and more powerful, and for passengers working or living in the building, corresponding information thereof is usually registered or recorded in the elevator communication system.

There exists a situation in which a person at a certain floor of the building is to be met by a strange visitor such as a courier, a postman, or a customer. In a case where the internal structure of the building becomes more complicated, it gets more and more difficult for the visitor to quickly find the person or place to be visited.

WO 2017/025106 A1 describes an online communication device mobile application and tablet computer mobile application based system which directly connects visitors with the tenants in buildings. Once a tenant has given a command to the system to grant the visitor access, the application helps to efficiently transport visitors from public access areas to secure destination floors via the elevator.

### SUMMARY OF THE INVENTION

According to a first aspect of the present disclosure, a communication method implemented in an environment of an elevator communication system inside a building is provided in accordance with claim 1.

A communication method according to an embodiment of the first aspect of the present disclosure further includes the steps of:
initiating a corresponding elevator service request by the first terminal via the elevator communication system based on the second indoor positioning information;
receiving, by the first terminal, a corresponding elevator-dispatching result returned via the elevator communication system; and
presenting the second indoor positioning information by the first terminal, in a case that the first terminal reaches a destination floor corresponding to the second indoor positioning information.

In a communication method according to any of the above embodiments of the first aspect of the present disclosure, said presenting the second indoor positioning information includes presenting indoor navigation information generated based on the second indoor positioning information and a first indoor positioning information of the first terminal.

A communication method according to the above embodiments of paragraph [007] further includes the step of:
generating elevator-taking navigation information based on the elevator-dispatching result and the first indoor positioning information of the first terminal, and presenting the elevator-taking navigation information on the first terminal.

In a communication method according to any of the above embodiments of the first aspect of the present disclosure, after the second terminal accepts the request, in addition to the second indoor positioning information, only information related to the target object that is authorized to be disclosed by the second terminal is presented to the first terminal.

A communication method according to any of the above embodiments of the first aspect of the present disclosure further includes the step of:
monitoring, by the elevator communication system, a movement of the first terminal within the building by acquiring the first indoor positioning information of the first terminal.

In a communication method according to any of the above embodiments of the first aspect of the present disclosure, the step of determining the to-be-visited target object includes:
searching for the target object by the first terminal from passenger related information recorded in the elevator communication system, based on feature information of the target object; and
selecting, by the first terminal, a corresponding object from the search result as the target object.

In a communication method according to any of the above embodiments of the first aspect of the present disclosure, the first indoor positioning information is the indoor positioning information of the first terminal acquired by an indoor positioning system.

A communication method according to another embodiment or any of the above embodiments of the first aspect of the present disclosure further includes the step of:
further transmitting an electronic visitor credential by the second terminal to the first terminal via the elevator communication system.

In a communication method according to any of the above embodiments of the first aspect of the present disclosure, the first terminal and/or the second terminal receives a visiting status between the first terminal and the second terminal transmitted by the elevator communication system, wherein the visiting status is determined based on a communication process of the communication method.

A computer readable storage medium may be provided, which has a computer program stored thereon, wherein the program is executable by a processor to implement the steps of any of the above communication methods. Such a computer readable storage medium as such does not form part of the claimed invention.

According to a second aspect of the present disclosure, an elevator system is provided in accordance with claim 11.

The above features and operations of the present disclosure will become more apparent from the following description and the accompanying drawings.

### BRIEF DESCRIPTION OF THE DRAWINGS

The above and other objects of the present disclosure will become more complete and clearer from the following detailed description with reference to the accompanying drawings, wherein identical or similar elements are denoted by identical reference signs, in which:
FIG. 1 schematically shows an environment of an elevator communication system according to an embodiment of the present disclosure and a terminal implementing a communication method according to an embodiment of the present disclosure in the environment;
FIG. 2 is a basic diagram illustrating the principle of a communication method in an environment of an elevator communication system according to an embodiment of the present disclosure; and
FIG. 3 is a flow chart of a communication method in an environment of an elevator communication system according to an embodiment of the present disclosure.

### DETAILED DESCRIPTION OF THE EMBODIMENT(S) OF THE INVENTION

For the sake of brevity and illustration, the principles of the present disclosure are described herein mainly with reference to exemplary embodiments thereof.

The terms "first", "second", etc., if they are used, do not necessarily denote any order or any preferential relationship, but may be used to distinguish more clearly the objects for which they are defined.

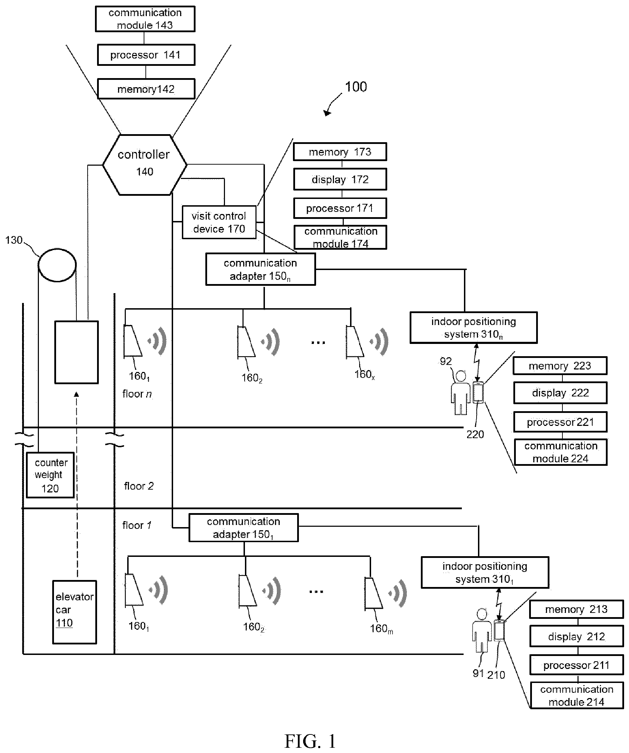

FIG. 1 schematically shows an environment of an elevator communication system according to an embodiment of the present disclosure and a terminal implementing a communication method according to an embodiment of the present disclosure in the environment, wherein an elevator communication system 100 according to an embodiment of the present disclosure is shown, and the communication method according to an embodiment of the present disclosure may be performed in the environment of the elevator communication system 100.

The elevator communication system 100 is installed inside a building, which may be, for example, an office building or a collection of office buildings that may be physically close to each other or may not be physically be close to each other. The building may include any number of floors, for example, floor *1*, floor 2, ..., floor *n* (n being an integer greater than or equal to 2), and the internal structure of the floor of the building is not restrictive; the more complicated the internal structure of the floor is, the more likely the advantages of the communication method according to an embodiment of the present disclosure can be embodied, and the more the user experience can be improved. Persons entering the building may travel to a destination floor by taking one or more elevator cars 110 connected by the elevator communication system 100.

The elevator communication system 100 is part of an elevator system which mainly includes an elevator car 110, a counterweight 120, a drive pulley 130, etc. A controller 140 in the elevator communication system 100 is configured to control operation of one or more elevator cars 110. For example, it may receive an elevator service request command from an interior of the elevator car 110 or from a landing area and perform a dispatching operation on the elevator car 110 based on the elevator service request command.

The controller 140 may be implemented by one or more computing devices; the controller 140 may include a processor 141, a memory 142, and a communication module 143; wherein the processor 141 may be any type of computer processor or a combination of computer processors, such as a microprocessor, a microcontroller, a digital signal processor, an application specific integrated circuit, a programmable logic device, and/or a field programmable array; the memory 142 may be a non-transitory computer readable storage medium in the controller 140, which medium includes executable instructions stored thereon (e.g., stored as firmware); and the communication module 143 may implement or support one or more communication protocols to communicate with other components of the elevator communication system 100. The processor 141 may for example, during the process of the following exemplified communication method, execute program instructions on the memory 142 to implement corresponding dispatching control or other preset functions, or to facilitate implementation of at least some of the steps of the communication method of the present disclosure.

The elevator communication system 100 may also include one or more wireless beacons 160 for each floor. By way of example, m wireless beacons 160₁, 160₂, ..., 160ₘ are installed in floor 1, and x wireless beacons 160₁, 160₂, ..., 160ₓ are installed in floor *n*; in the same floor, a plurality of wireless beacons 160 may be reasonably spaced apart from each another to facilitate a substantially coverage of the wireless signals broadcast by a plurality of wireless beacons 160 over a desired or reasonable range /distance. Of course, the elevator communication system 100 may also include a wireless beacon (not shown) disposed in the elevator car 110 which can broadcast wireless signals substantially covering the elevator car 110.

Respective communication adapters may be disposed corresponding to the wireless beacons 160 such that the wireless beacons 160 may be communicatively connected to each other in a wired or wireless manner, or the wireless beacons 160 may be communicatively connected to the controller 140 in a wired or wireless manner. By way of example, m wireless beacons 160₁, 160₂, ..., 160ₘ are connected to a communication adapter 150₁, x wireless beacons 160₁, 160₂, ..., 160ₓ are connected to a communication adapter 150ₙ, and each communication adapter 150 may be connected to the controller 140 of the elevator system through corresponding communication hardware, such as in a wired manner. Of course, the communication adapters 150 may also communicate with each other.

The wireless beacons 160 may be one or several types of wireless signaling devices. In an embodiment, the wireless beacons 160 may be Bluetooth modules, and in particular may be Bluetooth Low Energy (BLE) modules. Correspondingly, they specifically broadcast BLE signals to cover the corresponding ranges. In other embodiments, the wireless beacons 160 may also be other types of wireless beacons, such as WiFi modules, or other wireless beacons similar to the BLE module that are known to those skilled in the art. It will be appreciated that other wireless beacons similar to the BLE module which emerge after the filing date of the present application may alternatively be used in the present disclosure to achieve the objects and solutions of the present disclosure.

Through the elevator communication system 100 exemplified in the present disclosure, when a passenger carrying a personal mobile terminal (e.g., a smart phone) enters the coverage of the wireless signals of the wireless beacons 160 of the corresponding floor, a personal mobile terminal installed with a corresponding elevator-calling application component may interact with one of the wireless beacons 160 or even establish a wireless connection with it, such that an elevator service request command (e.g., an elevator service request command including an elevator-calling direction and/or a destination floor) may be transmitted to the elevator communication system 100. After receiving the elevator service request command, the controller 140 may schedule a dispatch for the passenger of the personal mobile terminal. In some embodiments, the personal mobile terminal may automatically complete the above elevator service request process even in a case of hands-free operation, which greatly enhances the passenger experience.

In a building, there is a situation in which one person needs to visit another person or place. Therefore, the elevator passengers include one or more visitors and one or more to-be-visited target objects, and they are inevitably in the environment of the elevator communication system 100. One of the visitors 91 and one of the to-be-visited target objects 92 are shown in FIG. 1, wherein the first terminal 210 is a terminal used by the visitor 91, and the second terminal 220 is a terminal used by the to-be-visited target object 92. In an embodiment, the first terminal 210 and/or the second terminal 220 may be a personal mobile terminal carried by the passenger, such as a smart phone, a wearable smart device (e.g., a smart bracelet, etc.), a personal digital assistant (PAD), etc. The personal mobile terminal may be installed with a corresponding application or component (such as APP) to implement the above functions such as the elevator service request. In other embodiments, where, for example, the location of the to-be-visited target object is relatively fixed, the first terminal 210 and/or the second terminal 220 may also be fixed electronic terminals fixedly installed at respective locations of respective floors inside the building, such as an elevator-calling terminal for sending an elevator service request and connected to or included in the elevator communication system 100.

As shown in FIG. 1, the first terminal 210 may include a processor 211, a display 212, a memory 213, and a communication module 214; wherein the processor 211 may be any type of computer processor or a combination of computer processors, such as a microprocessor, a microcontroller, a digital signal processor, an application specific integrated circuit, a programmable logic device, and/or a field programmable array; the memory 213 may be a non-transitory computer readable storage medium in first terminal 210, the medium including executable instructions stored thereon (e.g., stored as firmware); and the communication module 214 may implement or support one or more communication protocols so that it can communicate with the elevator communication system 100. For example, it supports the BLE communication protocol so that it may be communicatively connected to the wireless beacon 160 configured as the BLE module. The display 212 may display the corresponding content under the control of the processor 211. The processor 211 may for example, during the process of the following exemplified communication method, execute program instructions on the memory 213 to implement at least some of the steps of the communication method of the present disclosure.

As shown in FIG. 1, the second terminal 220 may include a processor 221, a display 222, a memory 223, and a communication module 224; wherein the processor 221 may be any type of computer processor or a combination of computer processors, such as a microprocessor, a microcontroller, a digital signal processor, an application specific integrated circuit, a programmable logic device, and/or a field programmable array; the memory 223 may be a non-transitory computer readable storage medium in second terminal 220, the medium including executable instructions stored thereon (e.g., stored as firmware); and the communication module 224 may implement or support one or more communication protocols so that it can communicate with the elevator communication system 200. For example, it supports the BLE communication protocol so that it may be communicatively connected to the wireless beacon 160 configured as the BLE module. The display 222 may display the corresponding content under the control of the processor 221. The processor 221 may for example, during the process of the following exemplified communication method, execute program instructions on the memory 223 to implement at least some of the steps of the communication method of the present disclosure.

It should be noted that the visitor and the to-be-visited target object are relative concepts. For example, in a case that the application scenario changes, the visitor may also change to the to-be-visited target object, and the to-be-visited target object may also change to the visitor. Moreover, the visitor is not limited to the person coming in from outside the building. For example, he/she may be a person working in a certain floor in the building, who needs to visit the target object in another floor; the visitor and the to-be-visited target object are not limited to "person". By way of example, the to-be-visited target object may be a certain company, a room number, or the like.

Continuing with FIG. 1, in an embodiment, the elevator communication system 100 may communicate with indoor positioning systems 310. The indoor positioning systems 310 may be installed in each floor in the building, so that indoor positioning of, for example, the first terminal 210 or the second terminal 220 can be realized. For example, the floor 1 is installed with an indoor positioning system 310₁, the floor *n* is installed with an indoor positioning system 310ₙ, the second terminal 220 in the floor *n* may acquire the corresponding second indoor positioning information through the indoor positioning system 310ₙ, and the first terminal 210 in the floor 1 may acquire the corresponding first indoor positioning information through the indoor positioning system 310₁. The indoor positioning information determined by each indoor positioning system 310 may of course also be transmitted to the elevator communication system 100 via for example the communication adapters 150, for example, transmitted to the controller 140.

The indoor positioning technology employed by the indoor positioning system 310 may be, but is not limited to, Bluetooth positioning, Zigbee positioning, or Wi-Fi positioning. By way of example, when the indoor positioning system 310 is a Bluetooth positioning system, the wireless beacons 160 in each floor of the elevator communication system 100 may also be used as a wireless access point AP of the indoor positioning system 310.

Continuing with FIG. 1, the elevator communication system 100 includes a visit control device 170 which is configured to manage a visiting status between the first terminal 210 corresponding to the visitor 91 and the second terminal 220 corresponding to the to-be-visited target object 92 based on a communication process of the first terminal 210 and the second terminal 220 in an environment of the elevator communication system 100. The visit control device 170 may establish a communication connection with the first terminal 210 or the second terminal 220 connected to the elevator communication system 100, via for example the communication adapters 150, the wireless beacons 160, and the like. The visit control device 170 may also receive any information transmitted from the first terminal 210 and the second terminal 220 to the elevator communication system 110, for example, feature information of the target object, the request to establish communication, feedback information on acceptance of the request, first indoor positioning information of the first terminal 210, second indoor positioning information of the second terminal 220, an electronic visitor credential transmitted by the second terminal 220, a request to transmit the electronic visitor credential, and other feedback information. The visit control device 170 may determine a visiting status of the visiting process between the visitor 91 and the to-be-visited target object 92 according to the received information, so as to facilitate the building management personnel in conveniently monitoring and managing the security of visiting. At the same time, the visit control device 170 may also transmit corresponding visiting status information to the first terminal 210 and/or the second terminal 220 and present it on the first terminal 210 and/or the second terminal 220.

As shown in FIG. 1, the visit control device 170 may include a processor 171, a display 172, a memory 173, and a communication module 174; wherein the processor 171 may be any type of computer processor or a combination of computer processors, such as a microprocessor, a microcontroller, a digital signal processor, an application specific integrated circuit, a programmable logic device, and/or a field programmable array; the memory 173 may be a non-transitory computer readable storage medium in second terminal 170, the medium including executable instructions stored thereon (e.g., stored as firmware); and the communication module 174 may implement or support one or more communication protocols so that it can communicate with the elevator communication system 200. For example, it supports the BLE communication protocol so that it may be communicatively connected to the wireless beacon 160 configured as the BLE module. The display 172 may display the corresponding content under the control of the processor 171. The processor 171 may for example, during the process of the following exemplified communication method, execute program instructions on the memory 173 to manage the visiting status between the first terminal 210 and the second terminal 220.

It should be noted that only the main components in the elevator communication system 100 are simply shown in FIG. 1, which may, for example, further include components such as a management server; it will be understood that the structure of the elevator communication system 100 is not limited to the above example; rather, it may vary according to a change of the structure of the building and the difference in indoor communication technologies as used.

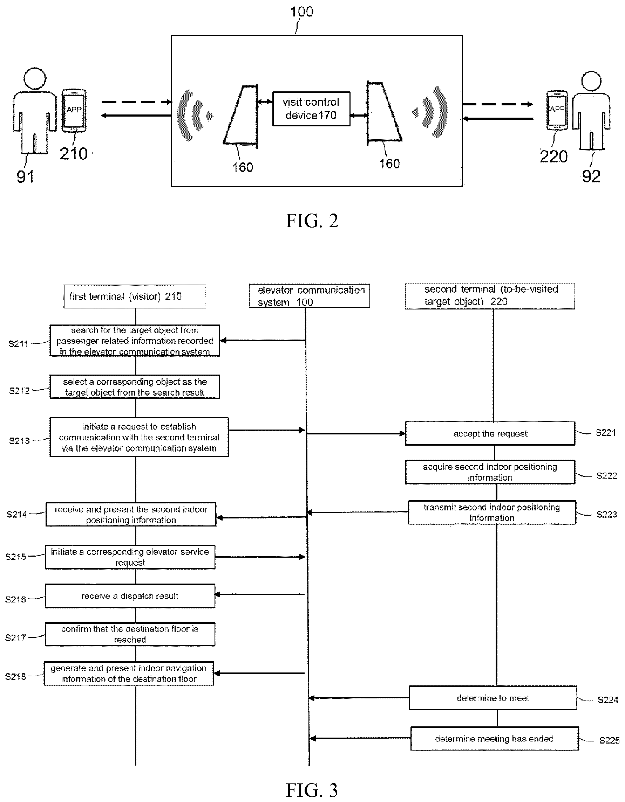

FIG. 2 is a basic diagram illustrating the principle of a communication method in an environment of an elevator communication system according to an embodiment of the present disclosure; and FIG. 3 is a flow chart of a communication method in an environment of an elevator communication system according to an embodiment of the present disclosure. Hereinafter, a communication method according to an embodiment of the present disclosure will be described based on the environment of the elevator communication system illustrated in FIG. 1 and with reference to FIGS. 2 and 3. In the application example of the following communication method, it is assumed that the visitor 91 is relatively unfamiliar with the to-be-visited target object 92, and knows very little information about the target object 92, for example, only knowing his/her name, or even not knowing his/her office floor, full company name, telephone contact, etc. For the purpose of information protection, the target object 92 certainly does not want much personal information to be disclosed to the visitor 91, particularly in a case that the communication is performed without having the identity of the visitor 91 confirmed.

First, in step S211, the first terminal 210 searches for the target object 92 from passenger related information recorded in the elevator communication system 100, based on, for example, the name of the to-be-visited target object 92. It should be noted that the target object 92 working or living in the building typically has passenger related information thereof such as the name or ID registered or recorded in the elevator communication system 100, in order to be authorized to take the elevator. For example, feature information such as the name of the target object 92 is recorded in one or more components such as the controller 140 of the elevator communication system 100, a management server, and the like. Of course, in other embodiments, the searching may be based on other feature information of the target object 92 in addition to the name.

As an example, the visitor 91 may enter the name of the corresponding target object 92 on the first terminal 210, while the first terminal 210 establishes a communicative connection with the elevator communication system 100. For example, as shown in FIG. 2, the first terminal 210 establishes a communicative connection with the elevator communication system 100 through a nearby wireless beacon 160 so that a retrieval or search of passenger related information may be conducted in corresponding components of the elevator communication system 100. The elevator communication system 100 may return a search result, such as a list formed by one or more search results.

In step S212, a corresponding object is selected as the target object 92 from the search result. By way of example, if multiple search results are included, the visitor 91 may determine which object is the target object 92 that he/she wants to visit, based on other information the visitor 91 knows (e.g., occupation, etc.).

Thus, the visitor 91 determines the to-be-visited target object 92 from the elevator communication system 100 via the first terminal.

In step S213, the first terminal 210 initiates a request to establish communication with the second terminal 220 via the elevator communication system 100. During this process, both the first terminal 210 and the second terminal 220 access the elevator communication system 100. Therefore, as shown in FIG. 2, the request of the first terminal 210 is correspondingly forwarded to the second terminal 220 via the elevator communication system 100.

It should be noted that, in response to the reception of the information transmitted by the first terminal 210 to the elevator communication system 100 in step S211, step S212, and step S213, the visit control device 170 may determine the visiting status based on the received information, such as "having a guest. Accordingly, the visit control device 170 in the elevator communication system 100 may transmit the visiting status information and/or corresponding prompts to the second terminal 220 and the first terminal 210, and in particular, the second terminal 220 may present the visiting status information.

In step S221, after receiving the request, the second terminal 220 may accept it. Of course, in other embodiments, the second terminal 220 may also reject the request as needed, and the first terminal 210 is therefore unable to obtain any information of the target object 92 from the second terminal 220. It should be noted that after the request is accepted, basic communication may be performed between the first terminal 210 and the second terminal 220. For example, the visitor of the first terminal 210 may express its own identity and the purpose of the visit; as such, the target object 92 may decide whether to accept the visiting request of the visitor 91 corresponding to the first terminal 210.

In consideration of, for example, the structural complexity of the floor in which the target object 92 is located, the second terminal 220 obtains information of the current location of the target object 92 from the indoor positioning system 310ₙ, such as second indoor positioning information, i.e., step S222. Further, the second indoor positioning information is transmitted to the first terminal 210 via the elevator communication system 100, i.e., step S223. The second indoor positioning information may include information of the floor in which the target object 92 is located, such as floor *n.*

In step S223, an electronic visitor credential may also be transmitted to the first terminal 210 via the elevator communication system 100. For example, the elevator communication system 100 is instructed to transmit a corresponding electronic visitor credential to the first terminal 210. Thus, for the first terminal 210 that does not have the authority to take the elevator to the floor *n* where the corresponding second terminal 220 is located, it can acquire the corresponding temporary authority based on the electronic visitor credential, such as the authority of elevator service request operation. In this way, external visitors are prevented from entering the corresponding floors of the building at will, which is beneficial for improving the security.

It should be noted that such electronic visitor credential may be temporary, which is for example valid only for a specified time period, and is valid only when the corresponding floor is the destination floor or the starting floor.

In step S214, the first terminal 210 receives the second indoor positioning information of the second terminal 220. Of course, the second indoor positioning information may also be presented. In this way, the visitor 91 can conveniently determine its elevator-taking strategy and determine how to quickly find the target object 92.

It should be noted that in the foregoing communication process of the first terminal 210 and the second terminal 220, even if the second terminal 220 accepts the request initiated by the first terminal 210, in addition to the second indoor positioning information disclosed to the first terminal 210, only the information related to the target object 92 authorized by the second terminal to be disclosed is presented to the first terminal 210, which facilitates the confidentiality of the information of the target object 92, prevents the disclosure of its private information, etc., improves the user experience of the target object 92, and also enables this communication method to be more easily accepted by the user.

In step S215, the first terminal 210 initiates a corresponding elevator service request through the elevator communication system 10 based on the received second indoor positioning information.

In this step, if the initiation of the corresponding elevator service request requires a corresponding authority, the elevator service request may also be initiated based on the received electronic visitor credentials.

In this step, the elevator service request operation in which the destination floor is the floor *n* may be performed by a call application component installed in the first terminal 210. The specific operation mode is not restrictive. For example, a manual operation may be performed in the call application component, or the corresponding operation may also be automatically completed. Once the elevator communication system 100 receives the elevator service request, it will transmit it to, for example, the controller 140 for dispatch control so that a corresponding dispatch result can be generated.

In step S216, the first terminal 210 receives the corresponding dispatch result returned via the elevator communication system 100, for example, the number of assigned elevator.

In this step, elevator-taking navigation information may also be generated based on the dispatch result and the first indoor positioning information of the first terminal 210, and the elevator-taking navigation information may be presented on first terminal 210, so that the visitor 91, even if not familiar with the elevators of the building, may also conveniently take the corresponding elevator based on route information in the elevator-taking navigation information. The first indoor positioning information of the first terminal 210 may be acquired in real time from the indoor positioning system 310₁.

With this step, the visitor 91 can be correctly guided to take the corresponding elevator.

In step S217, it is confirmed that the first terminal 210 reaches the destination floor. For example, if the visitor 91 takes the elevator to the floor *n*, the first terminal 210 can obtain corresponding floor information from the wireless beacon in the elevator car or the landing area, thereby determining whether the destination floor *n* is reached.

In step S218, indoor navigation information is generated based on the second indoor positioning information and the first indoor positioning information of the first terminal 210, and the indoor navigation information is presented, thereby guiding the passenger to find the target object 92 quickly and accurately. At this point, the first indoor positioning information of the first terminal 210 may be generated by the indoor positioning system 310ₙ and transmitted to the first terminal 210.

After step S218, the visitor 91 will approach target object 92 under the guidance of the indoor navigation information, that is, the second indoor positioning information of the visitor 91 will tend to be the same as the first indoor positioning information of the target object 92, and a comparison process of them may be completed in the visit control device 170. After the distance between the second indoor positioning information and the first indoor positioning information is less than or equal to a predetermined value, the visit control device 170 may send a reminder of whether to meet, in particular send a reminder of whether to meet to the second terminal 220, so as to proceed to step S224, in which the second terminal 220 determines to meet.

It should be noted that, in response to receiving the feedback information of step S224, the visit control device 170 may determine the visiting status based on the received information. For example, the visiting status is updated from "having a visitor" to "in meeting", and correspondingly, the visit control device 170 in the elevator communication system 100 may transmit the visiting status information to the second terminal 220 and the first terminal 210, and the first terminal 210 and/or the second terminal 220 may present the visiting status information.

After the meeting between the visitor 91 and the target object 92 is over, the first terminal 210 and/or the second terminal 220 may feed back meeting completion information to the visit control device 170, and the visit control device 170 may determine the visiting status based on the received meeting completion information. For example, the visiting status is updated from "in meeting" to "meeting completed ". Accordingly, the visit control device 170 in the elevator communication system 100 may transmit the visiting status information to the second terminal 220 and the first terminal 210, and the first terminal 210 and/or the second terminal 220 may present the visiting status information. In an embodiment, according to the management requirements, the target object 92 may transmit a meeting completion electronic credential corresponding to the first terminal 210 to the visit control device 170 and/or the first terminal 210 via the second terminal 220, so as to facilitate the management personnel in managing the visiting process through the visit control device 170.

Hitherto, the communication process between the first terminal 210 and the second terminal 220 has substantially ended. It will be appreciated that the visitor 91 may continue to perform operations similar to steps S215-S218 in the environment of the elevator communication system 100, thereby facilitating the return of the visitor 91. After the first terminal 210 leaves the building or it is determined that the visiting is over, visit completion information may be transmitted to the visit control device 170, and the visit control device 170 may determine the visiting status based on the received meeting completion information. For example, the visiting status is updated from "meeting completed" to "visit completed".

In particular, in the process of steps S215-S218, the elevator communication system 100 may monitor a movement of the first terminal 210 inside the building by acquiring the first indoor positioning information of the first terminal 210, according to, for example, security control requirements. For example, the first indoor positioning information of the first terminal 210 is presented in real time to the second terminal 220 that has established a communication connection with the first terminal 210, or presented to the management terminal in the elevator communication system 100.

It should be noted that the current visiting status determined by the above visit control device 170 may be displayed in real time on the display 172 thereof for monitoring by the building management personnel. Of course, it may for example also be displayed on other devices or platforms within the elevator communication system 100.

The communication method of the above example makes full use of the communication function of the elevator communication system 100, so that the communication between the visitor and the to-be-visited target object is facilitated. On one hand, the indoor positioning information of the target object can be conveniently obtained, and the target object can be found in a complex indoor environment, which for example facilitates customer's visit. On the other hand, even if the visitor and to-be-visited target object are unfamiliar and the amount of information of the target object grasped by the visitor is little, the two can communicate efficiently, and information confidentiality and security of the target object can be guaranteed. Thus, both the visitor and the to-be-visited target object have a good user experience, and the expansion of the communication function is also beneficial for increasing the passenger's dependence on the use of the elevator communication system 100 and for increasing the passenger's goodwill towards the elevator communication system 100.

It will be understood that the communication method of an embodiment of the present disclosure is not limited to the scenario applied to the above example. Moreover, the structure of the elevator communication system 100 is also not limited to the above embodiments. For example, the first terminal 210 may be replaced by one or more relatively fixed elevator-calling terminals and the wireless beacons 160 may not be used (for example, the elevator-calling terminals are directly communicatively connected to the controller 140 in a wired way). The elevator-calling terminals may be connected to the elevator communication system 100 or belong to a part of the elevator communication system 100. Although the elevator-calling terminal cannot be carried by the visitor 91, the visitor 91 can also conveniently communicate with the target object 92 and know its indoor positioning information by executing operations of the above steps S211-S215 on the elevator-calling terminal, and can also conveniently initiate a corresponding elevator service request; for another example, the second terminal 220 may be replaced by one or more relatively fixed terminals and the wireless beacons 160 may not be used (for example, the fixed terminals are directly communicatively connected to the controller 140 in a wired way). The fixed terminals may be connected to the elevator communication system 100 or belong to a part of the elevator communication system 100. Although the fixed terminal cannot be carried by the target object 92, the target object 92 can also communicate with the visitor 91 and inform the indoor positioning information by executing operations of the above steps S221-S223 on the fixed terminal, which is especially suitable for a situation in which the target object 92 is a virtual entity such as a company and there are dedicated operators for the management.

It should be noted that the first terminal 210 and the second terminal 220 of the above embodiment of the present disclosure may be implemented by computer program instructions, for example, by using a dedicated APP or by integrating with an App corresponding to the call application component. These computer program instructions are provided to a processor of a general-purpose computer, a dedicated computer or other programmable data processing devices to form a personal mobile terminal 200 of an embodiment of the present disclosure. Moreover, these instructions may be executed by a processor of a computer or other programmable data processing devices to create units or components for implementing the functions/operations specified in these flowcharts and/or blocks and/or one or more of the flowchart blocks.

Moreover, these computer program instructions may be stored in a computer readable memory, and these instructions may indicate the computer or other programmable processors to implement the steps of the partial communication method corresponding to the above first terminal 210 and/or the steps of the partial communication method corresponding to the above second terminal 220.

It should also be noted that in some alternative implementations, the functions/operations shown in the blocks may occur without following the order shown in the flowchart. For example, two blocks shown in succession may be executed substantially concurrently, or these blocks may sometimes be executed in a reversed order, depending upon the function/operation involved.

It should be noted that the elements disclosed and depicted herein (including the flowcharts and block diagrams in the drawings) are intended to refer to the logical boundaries between the elements. However, according to software or hardware engineering practice, the components depicted and their functions may be executed on a machine by a computer executable medium having a processor capable of executing program instructions stored thereon, wherein the program instructions exist as a monolithic software structure, as an independent software module or as a module using external programs, code, services, etc., or any combination of them, and all such implementations may fall within the scope of the present disclosure.

The foregoing description is illustrative, and is not defined to limit the present disclosure to the description. Various non-limiting embodiments are disclosed herein; however, those skilled in the art will recognize that in the light of the above teaching, various modifications and variations are possible within the scope of the appended claims. Therefore, it will be appreciated that within the scope of the appended claims, disclosures other than the specific present disclosure may be practiced. For this reason, the dependent claims should be studied to determine the true scope and content.

## Claims

1. A communication method for an elevator communication system (100) inside a building, wherein the elevator communication system (100) is part of an elevator system and the communication method being intended to realize a communication between a first terminal (210) corresponding to a visitor (91) and a second terminal (220) corresponding to a to-be-visited target object (92) inside the building,
the communication method comprising the steps of:
determining the to-be-visited target object (92) by the first terminal (210) from the elevator communication system (100);
initiating, via the elevator communication system (100), a request to establish communication with the second terminal (220) by the first terminal (210);
accepting the request by the second terminal (220), and transmitting its second indoor positioning information to the first terminal (210) by the second terminal (220) via the elevator communication system (100); and
presenting the second indoor positioning information by the first terminal (210); and
**characterized in that**
the second indoor positioning information is the indoor positioning information of the second terminal (220) acquired by an indoor positioning system (310).

2. The communication method according to claim 1, further comprising the steps of:
initiating a corresponding elevator service request by the first terminal (210) through the elevator communication system (100) based on the second indoor positioning information;
receiving, by the first terminal (210), a corresponding elevator-dispatching result returned via the elevator communication system (100); and
presenting the second indoor positioning information by the first terminal (210), in a case that the first terminal (210) reaches a destination floor corresponding to the second indoor positioning information.

3. The communication method according to claim 1 or 2, wherein said presenting the second indoor positioning information comprises presenting indoor navigation information generated based on the second indoor positioning information and a first indoor positioning information of the first terminal (210).

4. The communication method according to claim 2, further comprising the steps of:
generating elevator-taking navigation information based on the elevator-dispatching result and a first indoor positioning information of the first terminal (210), and presenting the elevator-taking navigation information on the first terminal (210).

5. The communication method according to any of the preceding claims, wherein after the second terminal (220) accepts the request, in addition to the second indoor positioning information, only information related to the target object (92) that is authorized to be disclosed by the second terminal (220) is presented to the first terminal (210).

6. The communication method according to any of the preceding claims, further comprising the step of:
monitoring, by the elevator communication system (100), a movement of the first terminal (210) within the building by acquiring a first indoor positioning information of the first terminal (210).

7. The communication method according to any of the preceding claims, wherein the step of determining the to-be-visited target object (92) comprises:
searching for the target object (92) by the first terminal (210) from passenger related information recorded in the elevator communication system (100), based on feature information of the target object (92); and
selecting, by the first terminal (210), a corresponding object from the search result as the target object (92).

8. The communication method according to claim 1 or 6, wherein the first indoor positioning information is the indoor positioning information of the first terminal (210) acquired by an indoor positioning system (310).

9. The communication method according to any of the preceding claims, further comprising the step of:
further transmitting an electronic visitor credential by the second terminal (220) to the first terminal (210) via the elevator communication system (100).

10. The communication method according to any of the preceding claims, further comprising the step of:
receiving, by the first terminal (210) and/or the second terminal (220), a visiting status between the first terminal (210) and the second terminal (220) transmitted by the elevator communication system (100), wherein the visiting status is determined based on a communication process of the communication method.

11. An elevator system comprising an elevator communication system (100), said elevator communication system (100) comprising a controller (140), and further comprising a first terminal (210) that can be used by a visitor (91) and/or a second terminal (220) that can be used by a to-be-visited target object (92); wherein the second terminal (220), the first terminal (210), and the controller (140) are communicatively connected, wherein
the first terminal (210) is configured to implement the following operations:
determine the to-be-visited target object (92) by the first terminal (210) from the elevator communication system (100);
initiate, via the elevator communication system (100), a request to establish communication with the second terminal (220) by the first terminal (210); and
receive and present second indoor positioning information of the second terminal (220) by the first terminal (210), wherein the second indoor positioning information is transmitted to the first terminal (210) via the elevator communication system (100) after the request is accepted by the second terminal (220); and
the second terminal (220) is configured to implement the following operations:
accept the request by the second terminal (220); and
transmit the second indoor positioning information to the first terminal (210) via the elevator communication system (100) and
**characterized in that**
the second indoor positioning information is the indoor positioning information of the second terminal (220) acquired by an indoor positioning system (310).

## Patentansprüche

1. Kommunikationsverfahren für ein Aufzugskommunikationssystem (100) innerhalb eines Gebäudes, wobei das Aufzugkommunikationssystem (100) Teil eines Aufzugsystems ist und das Kommunikationsverfahren dazu ausgelegt ist, eine Kommunikation zwischen einem ersten Endgerät (210), welches einem Besucher (91) entspricht, und einem zweiten Endgerät (220), welches einem zu besuchenden Zielobjekt (92) entspricht, innerhalb des Gebäudes zu realisieren,
wobei das Kommunikationsverfahren die folgenden Schritte umfasst:
Bestimmen des zu besuchenden Zielobjekts (92) durch das erste Endgerät (210) von dem Aufzugkommunikationssystem (100);
Initiieren einer Anfrage über das Aufzugkommunikationssystem (100), eine Kommunikation mit dem zweiten Endgerät (220) durch das erste Endgerät (210) herzustellen;
Akzeptieren der Anfrage durch das zweite Endgerät (220) und Übertragen seiner zweiten Innenpositionierungsinformation an das erste Endgerät (210) durch das zweite Endgerät (220) über das Aufzugkommunikationssystem (100); und
Präsentieren der zweiten Innenpositionierungsinformation durch das erste Endgerät (210); und
**dadurch gekennzeichnet**
**dass** die zweite Innenpositionierungsinformation die Innenpositionierungsinformation des zweiten Endgeräts (220) ist, welche durch ein Innenpositionierungssystem (310) erlangt wird.

2. Kommunikationsverfahren nach Anspruch 1, weiter umfassend die folgenden Schritte:
Initiieren einer entsprechenden Aufzugdienstanfrage durch das erste Endgerät (210) durch das Aufzugkommunikationssystem (100) basierend auf der zweiten Innenpositionierungsinformation;
Empfangen eines entsprechenden Aufzugabfertigungsergebnisses, welches über das Aufzugkommunikationssystem (100) zurückgesendet wird, durch das erste Endgerät (210); und
Präsentieren der zweiten Innenpositionierungsinformation durch das erste Endgerät (210) in einem Fall, dass das erste Endgerät (210) ein Bestimmungsstockwerk entsprechend der zweiten Innenpositionierungsinformation erreicht.

3. Kommunikationsverfahren nach Anspruch 1 oder 2, wobei das Präsentieren der zweiten Innenpositionierungsinformation ein Präsentieren von Innennavigationsinformation umfasst, welche basierend auf der zweiten Innenpositionierungsinformation und einer ersten Innenpositionierungsinformation des ersten Endgeräts (210) erzeugt wird.

4. Kommunikationsverfahren nach Anspruch 2, weiter umfassend die folgenden Schritte:
Erzeugen von aufzugsnehmenden Navigationsinformationen basierend auf den Aufzugsabfertigungsergebnis und einer ersten Innenpositionierungsinformation des ersten Endgeräts (210) und Präsentieren der aufzugsnehmenden Navigationsinformation auf dem ersten Endgerät (210).

5. Kommunikationsverfahren nach einem der vorstehenden Ansprüche, wobei zusätzlich zu der zweiten Innenpositionierungsinformation nur Informationen bezogen auf das Zielobjekt (92), welches dazu autorisiert ist, durch das zweite Endgerät (220) mitgeteilt zu werden, dem ersten Endgerät (210) präsentiert werden, nachdem das zweite Endgerät (220) die Anfrage akzeptiert.

6. Kommunikationsverfahren nach einem der vorstehenden Ansprüche, weiter umfassend die folgenden Schritte:
Überwachen einer Bewegung des ersten Endgeräts (210) innerhalb des Gebäudes durch das Aufzugkommunikationssystem (100) durch ein Erlangen einer ersten Innenpositionierungsinformation des ersten Endgeräts (210).

7. Kommunikationsverfahren nach einem der vorstehenden Ansprüche, wobei der Schritt eines Bestimmens des zu besuchenden Zielobjekts (92) Folgendes umfasst:
Suchen des Zielobjekts (92) durch das erste Endgerät (210) aus fahrgastbezogenen Informationen, welche in dem Aufzugkommunikationssystem (100) aufgezeichnet sind, basierend auf Merkmalsinformationen des Zielobjekts (92); und
Auswählen eines entsprechenden Objekts aus dem Suchergebnis als das Zielobjekt (92) durch das erste Endgerät (210).

8. Kommunikationsverfahren nach Anspruch 1 oder 6, wobei die erste Innenpositionierungsinformation die Innenpositionierungsinformation des ersten Endgeräts (210) ist, welche durch ein Innenpositionierungssystem (310) erlangt wird.

9. Kommunikationsverfahren nach einem der vorstehenden Ansprüche, weiter umfassend die folgenden Schritte:
Weiterübertragen eines elektronischen Besucherausweises durch das zweite Endgerät (220) an das erste Endgerät (210) über das Aufzugskommunikationssystem (100).

10. Kommunikationsverfahren nach einem der vorstehenden Ansprüche, weiter umfassend die folgenden Schritte:
Empfangen eines Besucherstatus zwischen dem ersten Endgerät (210) und dem zweiten Endgerät (220), welcher durch das Aufzugkommunikationssystem (100) übertragen wird, durch das erste Endgerät (210) und/oder das zweite Endgerät (220), wobei der Besuchsstatus basierend auf einem Kommunikationsprozess des Kommunikationsverfahrens bestimmt wird.

11. Aufzugsystem, umfassend ein Aufzugkommunikationssystem (100), wobei das Aufzugkommunikationssystem (100) eine Steuerung (140) umfasst und weiter ein erstes Endgerät (210) umfasst, welches durch einen Besucher (91) verwendet werden kann, und/oder ein zweites Endgerät (220), welches durch ein zu besuchendes Zielobjekt (92) verwendet werden kann; wobei das zweite Endgerät (220), das erste Endgerät (210) und die Steuerung (140) kommunikativ verbunden sind, wobei
das erste Endgerät (210) dazu konfiguriert ist, die folgenden Operationen zu implementieren:
Bestimmen des zu besuchenden Zielobjekts (92) durch das erste Endgerät (210) von dem Aufzugkommunikationssystem (100);
Initiieren einer Anfrage über das Aufzugkommunikationssystem (100), durch das erste Endgerät (210) eine Kommunikation mit dem zweiten Endgerät (220) herzustellen; und
Empfangen und Präsentieren von zweiten Innenpositionierungsinformationen des zweiten Endgeräts (220) durch das erste Endgerät (210), wobei die zweite Innenpositionierungsinformation über das Aufzugkommunikationssystem (100) an das erste Endgerät (210) übertragen wird, nachdem die Anfrage durch das zweite Endgerät (220) akzeptiert ist; und
wobei das zweite Endgerät (220) dazu konfiguriert ist, die folgenden Operationen zu implementieren:
Akzeptieren der Anfrage durch das zweite Endgerät (220); und
Übertragen der zweiten Innenpositionierungsinformation an das erste Endgerät (210) über das Aufzugkommunikationssystem (100) und
**dadurch gekennzeichnet**
**dass** die zweite Innenpositionierungsinformation die Innenpositionierungsinformation des zweiten Endgeräts (220) ist, welche durch ein Innenpositionierungssystem (310) erlangt werden.

## Revendications

1. Procédé de communication pour un système de communication d'ascenseur (100) à l'intérieur d'un bâtiment, dans lequel le système de communication d'ascenseur (100) fait partie d'un système d'ascenseur et le procédé de communication étant destiné à réaliser une communication entre un premier terminal (210) correspondant à un visiteur (91) et un second terminal (220) correspondant à un objet cible à visiter (92) à l'intérieur du bâtiment,
le procédé de communication comprenant les étapes suivantes :
la détermination de l'objet cible à visiter (92) par le premier terminal (210) à partir du système de communication d'ascenseur (100) ;
le lancement, par l'intermédiaire du système de communication d'ascenseur (100), d'une demande d'établissement de communication avec le second terminal (220) par le premier terminal (210) ;
l'acceptation de la demande par le second terminal (220) et la transmission de ses secondes informations de positionnement intérieur au premier terminal (210) par le second terminal (220) par l'intermédiaire du système de communication d'ascenseur (100) ; et
la présentation des secondes informations de positionnement intérieur par le premier terminal (210) ; et
**caractérisé en ce que**
les secondes informations de positionnement intérieur sont les informations de positionnement intérieur du second terminal (220) acquises par un système de positionnement intérieur (310).

2. Procédé de communication selon la revendication 1, comprenant en outre les étapes suivantes :
le lancement d'une demande de service d'ascenseur correspondante par le premier terminal (210) à travers le système de communication d'ascenseur (100) sur la base des secondes informations de positionnement intérieur ;
la réception, par le premier terminal (210), d'un résultat de renvoi d'ascenseur correspondant renvoyé par l'intermédiaire du système de communication d'ascenseur (100) ; et
la présentation des secondes informations de positionnement intérieur par le premier terminal (210), dans un cas où le premier terminal (210) atteint un étage de destination correspondant aux secondes informations de positionnement intérieur.

3. Procédé de communication selon la revendication 1 ou 2, dans lequel ladite présentation des secondes informations de positionnement intérieur comprend la présentation des informations de navigation intérieure générées sur la base des secondes informations de positionnement intérieur et de premières informations de positionnement intérieur du premier terminal (210).

4. Procédé de communication selon la revendication 2, comprenant en outre les étapes suivantes :
la génération des informations de navigation de prise d'ascenseur sur la base du résultat de renvoi d'ascenseur et de premières informations de positionnement intérieur du premier terminal (210) et la présentation des informations de navigation de prise d'ascenseur sur le premier terminal (210).

5. Procédé de communication selon l'une quelconque des revendications précédentes, dans lequel après acceptation de la demande par le second terminal (220), en plus des secondes informations de positionnement intérieur, seules les informations relatives à l'objet cible (92) qui sont autorisées à être divulguées par le second terminal (220) sont présentées au premier terminal (210).

6. Procédé de communication selon l'une quelconque des revendications précédentes, comprenant en outre l'étape :
de surveillance, par le système de communication d'ascenseur (100), d'un mouvement du premier terminal (210) à l'intérieur du bâtiment par l'acquisition des premières informations de positionnement intérieur du premier terminal (210) .

7. Procédé de communication selon l'une quelconque des revendications précédentes, dans lequel l'étape de détermination de l'objet cible à visiter (92) comprend :
la recherche de l'objet cible (92) par le premier terminal (210) à partir d'informations relatives aux passagers enregistrées dans le système de communication d'ascenseur (100), sur la base d'informations caractéristiques de l'objet cible (92) ; et
la sélection, par le premier terminal (210), d'un objet correspondant à partir du résultat de la recherche en tant qu'objet cible (92).

8. Procédé de communication selon la revendication 1 ou 6, dans lequel les premières informations de positionnement intérieur sont les informations de positionnement intérieur du premier terminal (210) acquises par un système de positionnement intérieur (310).

9. Procédé de communication selon l'une quelconque des revendications précédentes, comprenant en outre l'étape :
de transmission en outre d'un justificatif d'identité électronique de visiteur par le second terminal (220) au premier terminal (210) par l'intermédiaire du système de communication d'ascenseur (100).

10. Procédé de communication selon l'une quelconque des revendications précédentes, comprenant en outre l'étape:
de réception, par le premier terminal (210) et/ou le second terminal (220), d'un état de visite entre le premier terminal (210) et le second terminal (220) transmis par le système de communication d'ascenseur (100), dans lequel l'état de visite est déterminé sur la base d'un processus de communication du procédé de communication.

11. Système d'ascenseur comprenant un système de communication d'ascenseur (100), ledit système de communication d'ascenseur (100) comprenant un dispositif de commande (140), et comprenant en outre un premier terminal (210) qui peut être utilisé par un visiteur (91) et/ou un second terminal (220) qui peut être utilisé par un objet cible à visiter (92); dans lequel le second terminal (220), le premier terminal (210) et le dispositif de commande (140) sont reliés de manière communicative, dans lequel
le premier terminal (210) est configuré pour mettre en œuvre les opérations suivantes :
la détermination de l'objet cible à visiter (92) par le premier terminal (210) à partir du système de communication d'ascenseur (100) ;
le lancement, par l'intermédiaire du système de communication d'ascenseur (100), d'une demande d'établissement de communication avec le second terminal (220) par le premier terminal (210) ; et
la réception et la présentation de secondes informations de positionnement intérieur du second terminal (220) par le premier terminal (210), dans lequel les secondes informations de positionnement intérieur sont transmises au premier terminal (210) par l'intermédiaire du système de communication d'ascenseur (100) après acceptation de la demande par le second terminal (220); et
le second terminal (220) est configuré pour mettre en œuvre les opérations suivantes :
l'acceptation de la demande par le second terminal (220) ; et
la transmission des secondes informations de positionnement intérieur au premier terminal (210) par l'intermédiaire du système de communication d'ascenseur (100) et
**caractérisé en ce que**
les secondes informations de positionnement intérieur sont les informations de positionnement intérieur du second terminal (220) acquises par un système de positionnement intérieur (310).
